# DEMANDE DE BREVET EUROPEEN

(11) **EP 3 219 739 A1**
(43) Date de publication de la demande: **20.09.2017**
(21) Numéro de dépôt: 17160868.0
(22) Date de dépôt: 14.03.2017
(51) Int. Cl.: C08G 18/76, C08J 9/12, C08G 18/32, C08L 75/04

(54) **PROCEDE DE PREPARATION DE MOUSSES DE POLYURETHANE ET/OU POLYISOCYANURATE A PARTIR D'OXAZOLIDINE ET D'HUILE DE NOIX DE CAJOU**

(30) Priorité: 14.03.2016 FR 1652130
(71) Demandeur: Codem Picardie Construction Durable et Eco Materiaux Picardie, 80480 Dury (FR); Université de Picardie Jules Verne, 80000 Amiens (FR); Centre National de la Recherche Scientifique (CNRS), 75016 Paris (FR)
(72) Inventeur: DUPRE, Blaise, 80000 AMIENS (FR); THEVENIAUX, Alexis, 80000 AMIENS (FR); POSTEL, Denis, 80260 RUBEMPRE (FR); NGUYEN VAN NHIEN, Albert, 80090 AMIENS (FR)
(74) Mandataire: Regimbeau

(57) **Abrégé**

La présente invention concerne un procédé de préparation de mousses de polyuréthane et/ou polyisocyanurate. L'invention concerne également la mousse de polyuréthane et/ou polyisocyanurate susceptible d'être obtenue par ce procédé et ses différentes utilisations.

## Description

La présente invention concerne un procédé de préparation de mousses de polyuréthane (PUR) et/ou polyisocyanurate (PIR) à partir d'au moins un polyisocyanate et de polyols obtenus par réaction entre de l'huile de coque de noix de cajou et une oxazolidine.

La présente invention concerne également les mousses susceptibles d'être obtenues par ce procédé ainsi que ses différentes utilisations.

La mousse de polyuréthane PUR est un isolant alvéolaire, composé de fines cellules emmagasinant un gaz à faible conductivité thermique. La mousse PUR est utilisée dans de très nombreuses applications telles que l'industrie automobile en tant que mousse PUR souple ou dans l'isolation en tant que mousse PUR rigide. La formation des mousses de type polyuréthane est bien connue de l'homme du métier. Sa formation implique une réaction multi-composants entre un polyol (composé porteur d'au moins deux groupements hydroxy), un polyisocyanate (composé porteur d'au moins deux fonctions isocyanate -NCO) et un agent d'expansion. Cette réaction de condensation est notamment catalysée par des composés à caractères basiques tels que les amines tertiaires. Ainsi, un grand nombre de composés sont nécessaires à la formation de mousse PUR. Les polyols couramment utilisés dans la fabrication des mousses PUR sont des polyols polyéther ou polyols polyester, provenant essentiellement de la chimie du pétrole. L'utilisation de ces polyols présente de nombreux inconvénients. En effet, ces derniers proviennent du pétrole, matière fossile non renouvelable, et ont donc généralement un impact environnemental plus fort comparés à leurs homologues biosourcés. De plus, ces polyols ont un impact environnemental fort lors de leur formation dû à l'émission de composés d'origines volatiles. Il est donc important tant d'un point de vue environnemental qu'économique de pouvoir remplacer ces polyols issus de la chimie du pétrole par de nouveaux polyols biosourcés.

Les mousses de polyisocyanurate (PIR) et de polyuréthane/polyisocyanurate (PUR-PIR) sont également utilisées dans l'isolation et ont l'avantage d'apporter de meilleures propriétés anti-feu ainsi qu'une résistance à la compression plus élevée que les PUR. Le procédé de formation de ces mousses est similaire au procédé de formation des mousses PUR. En effet, l'obtention des mousses PUR, PIR et PUR-PIR dépendant du ratio isocyanate/polyol.

L'huile de coque de noix de cajou, huile aromatique naturelle connue et utilisée depuis de nombreuses années dans différents domaines de l'industrie chimique, tels que les résines, peintures ou ciments est considérée comme l'une des plus prometteuses sources écologiques pour la production de polyols. En effet, cette dernière consiste en un mélange de structures phénoliques naturelles possédant une chaine aliphatique en position méta. Bien que les proportions de ces structures phénoliques dans l'huile de coque de noix de cajou varient selon les pays et les méthodes de production ainsi que selon les méthodes d'extraction utilisées, le composant majoritaire dans les huiles décarboxylées puis éventuellement distillées est le cardanol obtenu à partir de l'acide anacardique. Il est connu de l'art antérieur d'utiliser le cardanol issu de l'huile de noix de cajou pour former des polyols qui seront utilisés par la suite dans une réaction de donneur de proton sur les fonctions isocyanates lors de la formation des mousses PUR. Le document WO2006/003668 divulgue notamment un procédé de préparation de polyol polyuréthane ainsi que les mousses obtenues, à partir de cardanol et d'un peracide généré in situ à partir de peroxyde d'hydrogène et d'un acide organique. Il est également connu d'utiliser le cardanol issu de la décarboxylation de l'huile de noix de cajou avec la 2-(3-oxazolidine)éthanol afin de former des polyols qui subissent ensuite une réaction de propoxylation avant d'être utilisés dans la fabrication de mousses PUR rigides (Ionescu et al. J. Polym. Environ. 20 (2012) 647-658; doi:10.1007/s10924-012-0467-9).

L'art antérieur présente notamment comme inconvénient, la transformation préalable et nécessaire de l'huile de noix de cajou. En effet, le cardanol utilisé pour la préparation de polyols est issu de la décarboxylation de l'huile de coque de noix de cajou brute.

Un autre inconvénient de l'art antérieur est lié au fait que les polyols issus de l'huile de coque de noix de cajou, notamment les polyols formés à partir d'oxazolidine et de cardanol, présentent une réactivité excessive et donc un temps de crème trop court dans la réaction de formation des mousses PUR, PIR et PUR-PIR. Lors de la formation de ces mousses ils sont donc généralement ajoutés à un mélange de polyols comprenant d'autres types de polyols tels que les polyols polyéther ou polyester. Ainsi, ces polyols ne permettent pas de remplacer totalement les polyols polyéther ou polyester dans la production de mousses de polyuréthane et/ou polyisocyanurate.

Par conséquent, il existait ainsi un besoin de mettre au point un procédé de préparation de mousses de polyuréthane et/ou polyisocyanurate à partir d'au moins un polyisocyanate et de polyols obtenus par réaction entre une matière première renouvelable brute issue de la biomasse et une oxazolidine.

C'est dans ce contexte que les inventeurs sont parvenus à mettre au point un procédé de production de mousses de polyuréthane et/ou polyisocyanurate permettant de remplacer totalement les polyols issus de la chimie du pétrole par des polyols biosourcés.

Ainsi, la présente invention a pour objet un procédé de préparation de mousses de polyuréthane et/ou polyisocyanurate à partir d'huile de coque de noix de cajou. L'utilisation d'huile de coque de noix de cajou permet l'obtention d'un mélange de polyols.

L'utilisation d'huile de coque de noix de cajou de type D-CNSL apporte une simplification du procédé, permettant de s'affranchir d'une étape de purification du composé majoritaire du CNSL (le cardanol), sans altérer les propriétés mécaniques et thermiques de la mousse obtenue.

On entend par huile de coque de noix de cajou au sens de la présente invention toute huile de coque de noix de cajou brute ou encore toute huile de coque de noix de cajou ayant subie une réaction de décarboxylation puis éventuellement de distillation.

On entend par huile de coque de noix de cajou brute, toute huile de coque de noix de cajou n'ayant pas subi de réaction de décarboxylation et étant donc composée majoritairement d'acide anacardique. La composition de l'huile de coque de noix de cajou brute consiste en :
- 60 à 80% d'acide anacardique,
- 10 à 20% de cardol et
- 0,5 à 5 % de 6-méthylcardol.

On entend par huile de coque de noix de cajou décarboxylée (on parlera de T-CNSL dans cette invention pour décrire cette composition) au sens de la présente invention, une huile composée majoritairement de cardanol issu de la décarboxylation de l'acide anacardique. La composition de l'huile de coque de noix de cajou décarboxylée consiste en :
- 50 à 70% de cardanol
- 10 à 20% de cardol
- 0,5 à 5 % de méthylcardol
- 10 à 30% de matière polymérique

On entend par huile de coque de noix de cajou distillée (on parlera de D-CNSL dans cette invention pour décrire cette composition) au sens de la présente invention, une huile composée majoritairement de cardanol issu de la décarboxylation de l'acide anacardique et dont la fraction polymérique a ensuite été séparée par une étape de distillation. Ainsi, une huile de coque de noix de cajou distillée est toujours décarboxylée. La composition de l'huile de coque de noix de cajou distillée consiste en :
- 60 à 80% de cardanol
- 10 à 20% de cardol
- 0,5 à 5 % de méthylcardol

Par polyols on entend toute structure carbonée portant au moins deux groupements OH.

Le procédé de préparation de mousses de polyuréthane et/ou polyisocyanurate comprend les étapes suivantes :
a) préparation d'un mélange de polyols I de formule (I) suivante par réaction entre une molécule de la famille des oxazolidines de formule (A) suivante et de l'huile de coque de noix de cajou, 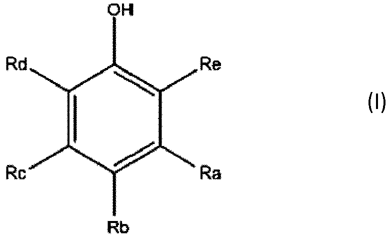 dans laquelle :
   Ra représente 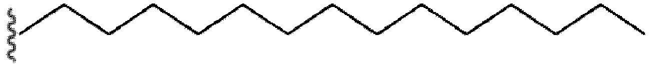 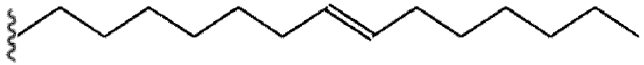 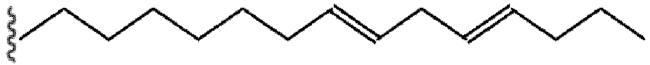 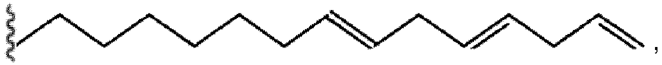
   Rb représente H ou 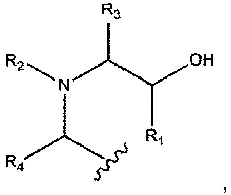
   Re représente H, COOH ou 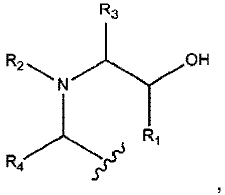
   Rc représente H ou OH,
   Rd représente H, CH₃ ou 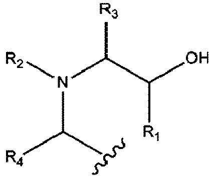 à condition que lorsque Rd représente CH₃, Rc représente OH, Rb et Re représentent indépendamment H ou 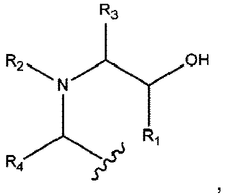 Rb et Re ne pouvant pas représenter H en même temps et à condition que lorsque Rd ne représente pas CH3, qu'au moins un parmi Rb, Rd et Re représente 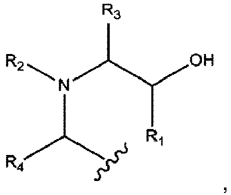 R₁, R₃ et R₄ représentent indépendamment les uns des autres H, un groupe (C₁-C₆)alkyle ou (C₁-C₆) alkyl-aryle, et R₂ représente un groupe (C₁-C₂₀)alkyle ou (C₁-C₂₀) alkyl-alcool, et 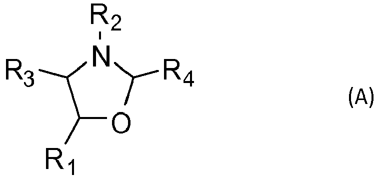 dans laquelle R₁, R₂, R₃ et R₄ sont tels que définis précédemment.
b)
   i. protonation ou alkylation totale desdits polyols I du mélange de l'étape a), de manière à obtenir un mélange de polyols II ou
   ii. protonation ou alkylation partielle desdits polyols I du mélange de l'étape a) de manière à obtenir un mélange de polyols I et II,
   ladite protonation étant réalisée par un agent donneur de proton et ladite alkylation étant réalisée par un dérivé alkylant, et
c) réaction du mélange préparé à l'étape b) avec au moins un polyisocyanate.

Par groupe « (C₁-C₂₀)alkyle » et « (C₁-C₆)alkyle », on entend, au sens de la présente invention, une chaîne hydrocarbonée saturée, linéaire ou ramifiée, comportant respectivement 1 à 20, notamment 1 à 6 atomes de carbone ou 1 à 6, notamment 1 à 4, atomes de carbone. A titre d'exemple, on peut citer les groupes méthyle, éthyle, propyle, isopropyle, butyle, isobutyle, sec-butyle, *tert*-butyle, pentyle ou encore hexyle.

Par « aryle », on entend, au sens de la présente invention, un groupement hydrocarboné aromatique, comportant de préférence de 6 à 10 atomes de carbone, et comprenant un ou plusieurs cycles accolés, comme par exemple un groupement phényle ou naphtyle. Avantageusement, il s'agit du phényle.

Par « (C₁-C₆)alkyl-aryle », on entend, au sens de la présente invention, un groupe (C₁-C₆)alkyle tel que défini ci-dessus, lié au reste de la molécule par l'intermédiaire d'un groupe aryle tel que défini ci-dessus. A titre d'exemple, on peut citer le groupe tolyle (CH₃Ph).

Par « (C₁-C₂₀)alkyl-alcool », on entend au sens de la présente invention, un groupe (C₁-C₂₀)alkyle, tel que défini ci-dessus, dans lequel un ou plusieurs atomes d'hydrogènes ont été remplacés chacun par un groupe hydroxy. A titre d'exemple on peut citer les groupes méthanol, éthanol, propanol, isopropanol, butanol ou encore isobutanol.

Dans la présente invention, on utilisera le terme « oxazolidine » pour désigner de manière générale toute molécule de la famille des oxazolidines de formule (A).

Dans la présente invention, sauf indication contraire, tous les pourcentages (%) indiqués sont des pourcentages en poids.

Dans la présente invention, l'indice hydroxyle d'un polyol est exprimé en mg de KOH/g de polyol, mesuré selon la norme DIN 53240-2.

L'étape a) met en jeu un mélange de composés phénoliques (cardol, cardanol, 6-méthylcardol ou acide anacardique). En cela, l'utilisation d'huile de coque de noix de cajou (brute, T-CNSL ou D-CNSL) permet l'obtention d'un mélange de polyols.

L'étape b) du procédé selon l'invention concerne la protonation ou l'alkylation totale ou partielle du mélange de polyols obtenu à l'étape a). Cette étape permet de moduler l'activité catalytique des polyols ainsi obtenue à l'étape a). En effet, les amines tertiaires présentes au sein de la structure des polyols obtenus à l'étape a) jouent le rôle de catalyseur vis-à-vis de la réaction alcool/isocyanate. En cela, une conversion de ces amines tertiaires en sel d'ammonium tertiaire ou quaternaire permet de diminuer l'effet catalytique apporté par ces fonctions. Les polyols développés permettent ainsi d'obtenir des synthèses de polyuréthane à temps de moussage faible, idéal pour une fabrication industrielle et permettant de s'affranchir de l'utilisation de catalyseurs externes aux polyols.

Selon un mode de réalisation préféré, dans la molécule de la famille des oxazolidines de formule (A), R₁, R₃ et R₄ représentent indépendamment les uns des autres H, un groupe (C₁-C₃)alkyle ou (C₁-C₃) alkyl-aryle, et R₂ représente un groupe (C₁-C₆)alkyle ou (C₁-C₆) alkyl-alcool.

Selon un mode de réalisation préféré, dans la molécule de la famille des oxazolidines de formule (A), R₁ représente H ou CH₃, R₃ et R₄ représentent H et R₂ représente un groupement (C₂-C₃)alkyl-alcool.

Selon un mode de réalisation préféré, dans la molécule de la famille des oxazolidines de formule (A), R₁ représente CH₃, R₃ et R₄ représentent H et R₂ représente un groupement isopropanol.

Selon un mode de réalisation préféré, la molécule de la famille des oxazolidines de formule (A) est la 2-(3-oxazolidine)propan-2-ol.

De manière avantageuse, l'huile de coque de noix de cajou utilisée est une huile de coque de noix de cajou brute, décarboxylé (T-CNSL) ou distillée (D-CNSL), avantageusement une huile de coque de noix de cajou distillée (D-CNSL), et consistant en :
- 60 à 80% de cardanol
- 10 à 20% de cardol
- 0,5 à 5 % de méthylcardol.

De manière avantageuse, le mélange d'huile de coque noix de cajou présente un indice hydroxyle compris entre 150 et 220 et une fonctionnalité moyenne comprise entre 1 et 2, c'est-à-dire entre 1 et 2 fonctions hydroxy par molécule.

L'étape a) de préparation d'un mélange de polyols I de formule (I) comprend la réaction entre les différentes structures phénoliques en fonction de l'huile de coque de noix de cajou utilisée (cardol, cardanol, acide anacardique et 6-méthylcardol) et une molécule de la famille des oxazolidines de formule (A).

De manière avantageuse, le mélange de polyols I ainsi obtenu est constitué de polyols ayant une fonctionnalité moyenne comprise entre 2 et 7 et un indice hydroxyle compris entre 300 et 600. Le mécanisme réactionnel entre les structures fonctionnalisées par l'oxazolidine, par ajout d'une amine tertiaire, est similaire à celui d'un phénol et de la *N*-(2-hydroxyethyl)-1,3-oxazolidine, décrit par lonescu et al. (J. Polym. Environ. 20 (2012) 647-658; doi:10.1007/s10924-012-0467-9).

Par conséquent, le mélange de polyols I de formule (I) obtenu lors de l'étape a) consiste en un mélange comprenant les polyols fonctionnalisés par l'oxazolidine, c'est-à-dire les polyols possédant une amine tertiaire.

De manière avantageuse, le ratio entre l'huile de coque de noix de cajou et l'oxazolidine est compris entre 1:5 et 5:1, avantageusement entre 1:1 et 1:2.

La préparation du mélange de polyols I à partir d'huile de coque de noix de cajou, présente ainsi l'avantage d'être obtenu à l'aide d'une seule réaction réalisée à une température entre 95°C et 150°C pendant une durée de 3 à 10 heures sous argon. Les conditions de réaction dépendent du type d'oxazolidine utilisée.

De manière générale, il est connu d'ajouter lors de la formation des mousses PUR, PIR ou PUR-PIR, au mélange comprenant le polyol, le polyisocyanate et de l'eau, un catalyseur choisi parmi les amines tertiaires, telles que la *N,N*-diméthylcyclohexylamine ou la *N,N*-diméthylbenzylamine ou parmi les composés métalliques à base de bismuth, de potassium ou d'étain. Ce catalyseur sert à la fois à favoriser la formation de dioxyde de carbone lors de la réaction de moussage entre le polyisocyanate et l'eau et à favoriser la réaction de polymérisation. Ainsi, la présence de polyols I dans le mélange possédant une ou plusieurs amines tertiaires selon le ratio huile de coque de noix de cajou/oxazolidine utilisé pour obtenir le mélange de polyols I lors de l'étape a), permet de rendre l'ajout d'un catalyseur non nécessaire. En effet, les polyols I possédant une ou plusieurs amines tertiaires, servent à la fois de polyols et de catalyseur. En revanche, la présence d'une ou plusieurs amines tertiaires sur l'ensemble des polyols I du mélange obtenu à l'étape a) rend ces derniers extrêmement réactifs vis-à-vis du polyisocyanate lors de la réaction de polymérisation des polyuréthanes et/ou polyisocyanurates. Il est donc important de pouvoir moduler le temps de crème lié à l'activité catalytique apportée par l'amine tertiaire au sein de la structure de ces polyols I.

Ceci est notamment réalisé lors de l'étape b). L'étape b) i. permet la protonation ou l'alkylation totale des polyols I du mélange de l'étape a) de manière à obtenir un mélange de polyols II. L'étape b) ii. permet quant à elle, la protonation ou l'alkylation partielle des polyols I du mélange de l'étape a) de manière à obtenir un mélange de polyols I et II. Ladite protonation étant réalisée par un agent donneur de proton et ladite alkylation étant réalisée par un dérivé alkylant.

Ainsi, lors de la protonation, l'agent donneur de proton, c'est-à-dire un composé possédant un hydrogène labile et donc capable d'initier une réaction de transfert de proton, transforme une amine tertiaire en un sel d'ammonium tertiaire.

Lors de l'alkylation, le dérivé alkylant permet d'initier une réaction d'addition de l'alkyle et transforme ainsi l'amine tertiaire en un sel d'ammonium quaternaire.

Ainsi, l'amine tertiaire qui est très réactive est transformée en sel d'ammonium tertiaire ou quaternaire beaucoup moins réactif lors de la protonation ou alkylation. Cette différence de pouvoir catalytique entre les amines tertiaires et les sels d'ammonium tertiaires ou quaternaires permet de moduler la réactivité des polyols. Dans le cadre de la présente invention un polyol II correspond à un polyol I ayant eu au moins une amine tertiaire transformée en un sel d'ammonium tertiaire ou quaternaire.

De manière avantageuse, la protonation ou alkylation totale des polyols I lors de l'étape b) i. du mélange obtenu lors de l'étape a) consiste en une protonation ou alkylation de 100% en poids des polyols I afin d'obtenir un mélange constitué uniquement de polyols II. Par conséquent, 100% des polyols du mélange ainsi obtenu ont eu au moins une amine tertiaire transformée en un sel d'ammonium tertiaire ou quaternaire.

De manière avantageuse, la protonation ou alkylation partielle des polyols I lors de l'étape b) ii. du mélange obtenu lors de l'étape a) consiste en une protonation ou alkylation supérieure ou égale à 10% et inférieure à 100% en poids des polyols I.

Par conséquent, le mélange de polyols I et II obtenu lors de protonation ou alkylation partielle de l'étape b) ii. consiste en un mélange comprenant les polyols n'ayant pas subi de protonation ou alkylation (polyols I) ainsi que les polyols ayant eu au moins une amine tertiaire transformée en un sel d'ammonium tertiaire ou quaternaire.(polyols II).

Ainsi, lors de l'étape b), 10 à 100% en poids des polyols I du mélange obtenu lors de l'étape a) sont transformés en polyols II.

De manière avantageuse, la protonation totale ou partielle des polyols I du mélange issu de l'étape a) lors de l'étape b) est réalisée avec 1 à 3 équivalents molaires d'un agent donneur de proton à température ambiante de préférence pendant une durée de 30 minutes à 2 heures.

De manière avantageuse, l'alkylation totale ou partielle des polyols I du mélange issu de l'étape a) lors de l'étape b) est effectuée à une température de 30 à 50°C, de préférence à 40°C, pendant 2 à 5 heures, de préférence pendant 3h en présence d'un agent alkylant.

De manière avantageuse, les mélanges de polyols II ou de polyols I et II, ainsi obtenus à la fin de l'étape b), sont constitués de polyols ayant une fonctionnalité moyenne comprise entre 2 et 7 et un indice hydroxyle compris entre 300 et 600.

De manière avantageuse, l'agent donneur de protons utilisé pour la préparation des polyols II est choisi parmi les acides minérales, tel que l'acide chlorhydrique, les acides organiques tel que l'acide acétique ou les ammoniums protonés tel que le chlorure d'ammonium. Avantageusement, l'agent donneur de protons est un ammonium protoné tel que le chlorure d'ammonium.

De manière avantageuse, le dérivé alkylant utilisé pour la préparation des polyols Il est choisi parmi les halogénures d'alkyles et les sulfonates d'alkyles, de préférence parmi les halogénures d'alkyles, préférentiellement parmi les halogénures de méthyle tel que l'iodométhane.

De préférence, la réaction d'alkylation est réalisée dans l'acétone.

Aucune fonctionnalisation supplémentaire des polyols I autre que la protonation ou l'alkylation lors de l'étape b) n'est nécessaire, le mélange de polyols II ou I et II obtenu à la fin de l'étape b) est engagé directement dans une réaction de polymérisation avec au moins un polyisocyanate lors de l'étape c) afin de permettre la préparation de mousse de polyuréthane ou polyisocyanurate. La réaction de polymérisation s'effectue à une température comprise entre 10 et 40°C pendant une durée comprise entre 2 et 30 minutes. De manière avantageuse, le ratio entre le mélange de polyols II ou I et II obtenu à la fin de l'étape b) et au moins un polyisocyanate est compris entre 1 :1 et 2,5 : 1, avantageusement entre 1 :1 et 1,2 : 1. L'obtention des mousses PUR, PIR et PUR-PIR dépendant du ratio isocyanate/polyol, on obtiendra une mousse PUR, PIR ou PUR-PIR selon le ratio obtenu à la fin de l'étape b). Lorsque le ratio entre le mélange de polyols II ou I et II obtenu à la fin de l'étape b) et au moins un polyisocyanate est :
- compris entre 1 :1 et 1 :1,3 on obtiendra une mousse polyuréthane PUR,
- compris entre 1 :1,3 et 1 :1,8 on obtiendra une mousse polyuréthane PUR-PIR,
- compris entre 1 :1,8 et 1 :2,5 on obtiendra une mousse polyuréthane PUR-PIR.Les polyisocyanates appropriés pour la formation de mousse PUR, PIR et PUR-PIR sont connus de l'homme du métier et comprennent avantageusement les polyisocyanates aromatiques, aliphatiques, cycloaliphatiques, arylaliphatiques et leurs mélanges, avantageusement les polyisocyanates aromatiques.

Des exemples de polyisocyanates appropriés incluent les isocyanates aromatiques tels que les isomères 4,4'-, 2,4'- et 2,2'- du diphenylmethane diisocyanate (MDI), tout composé issu de la polymérisation de ces isomères, le toluène 2,4- et 2,6-diisocyanate (TDI), le m- et p- phenylène diisocyanate, le naphtalène-1,5-diisocyanate; les isocyanates aliphatiques, cycloaliphatiques, arylaliphatiques tels que le 1,6-hexamethylene diisocyanate (HDI), l'isophorone diisocyanate (IPDI), le 4,4'-dicyclohexylmethane diisocyanate (H₁₂MDI), le 1,4-cyclohexane diisocyanate (CHDI), le bis(isocyanatomethyl)cyclo-hexane (H₆XDI,DDI) et le tetramethyxylylene diisocyanate (TMXDI). Il est également possible d'utiliser des mélanges quelconques de ces diisocyanates. De manière avantageuse les polyisocyanates sont les isomères 4,4'-, 2,4'- et 2,2'- du diphenylmethane diisocyanate (MDI).

Selon un mode de réalisation particulier, le procédé de préparation selon l'invention comprend en outre l'ajout à l'étape c) d'un polyol de type pétrosourcé (polyéther polyol / polyester polyol) présentant un indice hydroxyle compris entre 250 et 500.

De manière avantageuse, le procédé de préparation selon l'invention ne comprend aucun ajout de tensioactif et/ou de catalyseur de moussage, notamment lors de l'étape c). En effet, les polyols du mélange préparé lors de l'étape b) jouent à la fois le rôle de catalyseur grâce à la présence de l'amine tertiaire sur les polyols I et/ou polyols II ou des sels d'ammonium tertiaires ou quaternaires sur les polyols II, ainsi que le rôle de tensioactif grâce à la présence d'une tête polaire hydrophile (fonction hydroxy) et d'une queue hydrophobe (chaine alkyle). Par ailleurs, les sels d'ammonium quaternaires sont également connus comme ayant un effet catalytique sur la trimérisation de l'isocyanate lors de la formation de polyisocyanurate. Le procédé selon l'invention est donc remarquable en ce qu'il permet l'utilisation de polyols biosourcés permettant en plus d'éviter l'emploi de catalyseur et de tensio-actif, produits notamment couteux.

De manière avantageuse, le procédé de préparation selon l'invention comprend en outre l'ajout à l'étape c), d'un agent d'expansion, avantageusement sélectionné parmi les hydrofluorooléfines, tels que le 2,3,3,3-tétrafluoropropène (HFO-1234yf), le 1,3,3,3-tétrafluoropropène (HFO-1234ze) ou le 1-chloro-3,3,3-trifluoropropène (HFO-1233zd) les hydrofluorocarbures tels que le fluorométhane (HFC-41), le pentafluorobutane (HFC 365mfc) le 1,1,1-trifluoroéthane(HFC-143a), le 1,1-difluoroéthane (HFC-152a), les composés liquides et gazeux tels que le dioxyde de carbone, le chlorure de méthylene, l'acétone, le pentane, l'isopentane, le méthylal, le dimethoxymethane, le dimethylcarbonate et H₂O. L'agent d'expansion est avantageusement H₂O. L'agent d'expansion représente typiquement entre 1 et 25% en poids de la masse totale des composants de l'étape c).

De manière avantageuse, le procédé de préparation selon l'invention comprend en outre l'ajout à l'étape c), d'un retardateur de flamme organophosphoré, avantageusement le TCCP.

La présente invention a également pour objet un procédé de préparation d'un mélange de polyols I' de formule (I') suivante par réaction entre la 2-(3-oxazolidine)propan-2-ol et de l'huile de coque de noix de cajou éventuellement suivie d'une protonation et/ou alkylation totale ou partielle dudit mélange de polyols I', ladite protonation étant réalisée par un agent donneur de proton et ladite alkylation étant réalisée par un dérivé alkylant 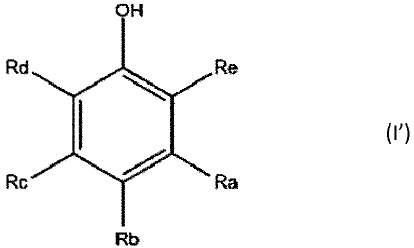 dans laquelle :
Ra représente 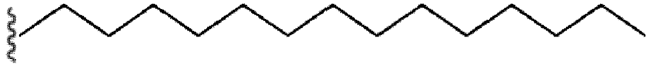 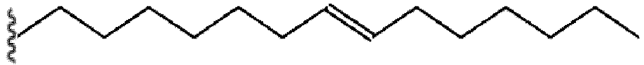 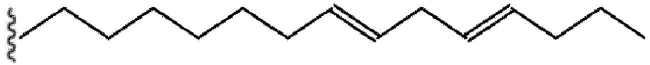 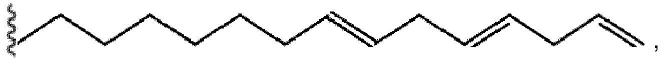
Rb représente H ou 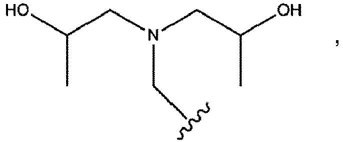
Re représente H, COOH ou, 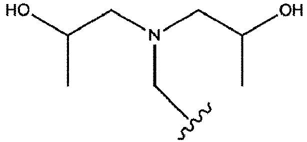
Rd représente H, CH₃ ou 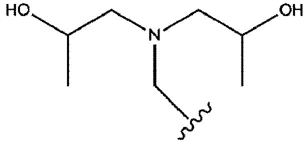
Rc représente H ou OH, à condition que lorsque Rd représente CH₃, Rc représente OH, Rb et Re représentent indépendamment H ou 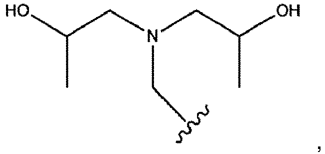 Rb et Re ne pouvant pas représenter H en même temps et à condition que lorsque Rd ne représente pas CH3, qu'au moins un parmi Rb, Rd et Re représente

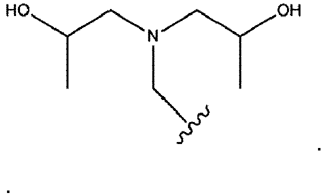

La présente invention concerne également les mousses polyuréthane et/ou polyisocyanurate (PUR, PIR, PUR-PIR) susceptibles d'être obtenues par le procédé de préparation de la présente invention. De manière avantageuse, la densité de la mousse de polyuréthane de l'invention est comprise entre 10 et 300 kg/m³. Les mousses de polyuréthane obtenues selon l'invention, pourront donc typiquement être des mousses souples ou rigides.

La conductivité des mousses de polyuréthane et/ou polyisocyanurate obtenues sera inférieure à 40mW/m.K, de préférence inférieure à 35 mW/m.K, de manière encore plus préférée inférieure à 30 mW/m.K.

La présente invention concerne également l'utilisation des mousses de polyuréthane et/ou polyisocyanurate. L'utilisation de la mousse de polyuréthane dans de nombreux domaines d'application tels que le bâtiment, les colles, l'ameublement ou l'emballage est bien connue de l'homme du métier.

La présente invention concerne également l'utilisation des mousses de polyuréthane et/ou polyisocyanurate comme matériau d'isolation, notamment dans le domaine du bâtiment.

La présente invention concerne également l'utilisation des mousses de polyuréthane et/ou polyisocyanurate comme colle, notamment pour le collage de panneaux d'isolation sur des cloisons.

La présente invention concerne également l'utilisation des mousses de polyuréthane et/ou polyisocyanurate comme solution d'enrobages de particules, avantageusement de particules végétales telles que le bois, le lin, le chanvre ou le miscanthus.

La présente invention concerne également l'utilisation des mousses de polyuréthane et/ou polyisocyanurate, dans la fabrication de panneaux d'isolation.

La présente invention concerne également l'utilisation des mousses de polyuréthane et/ou polyisocyanurate dans la fabrication de panneaux d'agencement.

L'invention est plus particulièrement décrite de manière non limitative dans les exemples qui suivent.

### FIGURES

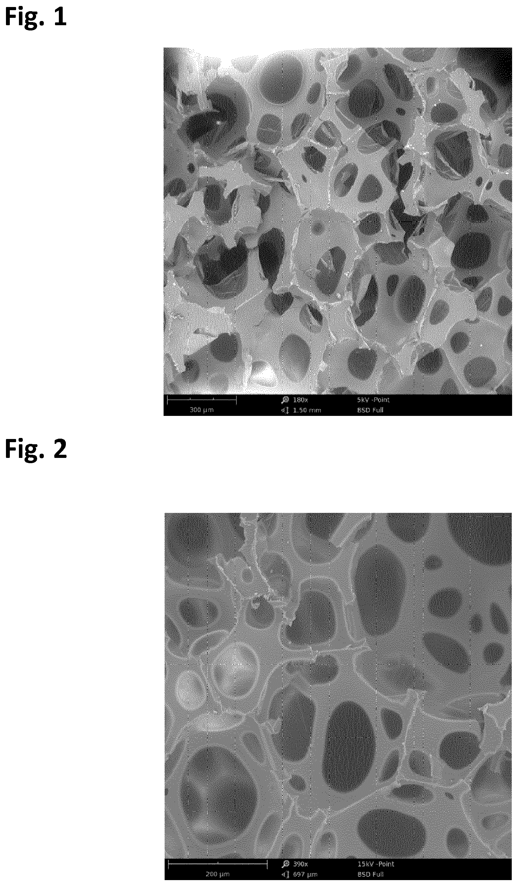

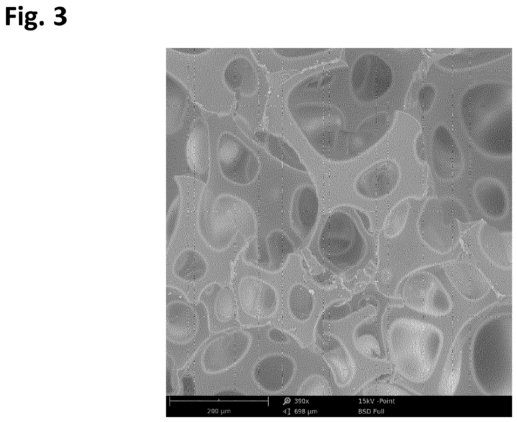

Figures 1 à 3 : clichés MEB (microscopie électronique à balayage) de la structure cellulaire des PU synthétisés à l'Exemple 2 (Figure 1 = composition 2, Figure 2 = composition 3, Figure 3 = composition 4).

### EXEMPLES

### Exemple 1 :

Le tableau 1 présente une composition 1 tirée d'une publication (S.Chuayjuljit et al. J. of metals, materials and minerals 17. (2007) 17-23.) soulignant la nécessité d'utiliser un catalyseur (Diméthylcyclohexylamine ou DMCHA) et un tensioactif (Polydiméthylsiloxane ou PMDS) dits classiques pour la formulation de mousses polyuréthanes à partir d'un polyol ne présentant pas de propriété d'autocatalyse.

**Tableau 1**

| | **Composition 1** |
|---|---|
| **Composants** | |
| polyol d'huile de palme (g) | 40 |
| Eau (g) | 1,2 |
| DMCHA (g) | 0,1 |
| PDMS (g) | 1 |
| PMDI (g) | 60 |
| | |

| **Paramètre de moussage** | |
|---|---|
| Temps de crème (s) | 1-5 |
| Densité (kg/m3) | 57 |
| Résistance à la compression (10%) en MPa | 0,26 |

### Exemple 2 : Procédé selon l'invention par protonation

Dans un premier temps, un mélange comprenant 20g (666mmol, 1 équivalent) de paraformaldéhyde et 40,7g (666mmol, 1 équivalent) de diisopropanolamine est porté à une température de 65°C pendant 3 heures pour conduire à 2-(3-oxazolidine)propan-2-ol. Dans un second temps, on procède aux étapes suivantes :
a) 24g (329mmol, 2 équivalents) de l'oxazolidine synthétisée sont mis à réagir avec 50g (164mmol, 1 équivalent) d'huile de noix de cajou brute à une température de 95°C pendant 3,5 heures sous argon afin d'obtenir un mélange de polyols I,
b) les polyols I du mélange ainsi obtenu à l'étape a) subissent une protonation totale (composition 4) ou partielle (composition 3) par le chlorure d'ammonium, puis
c) réaction du mélange préparé à l'étape b) avec le MDI, de l'eau et un hydrofluorocarbure afin de former la mousse de polyuréthane.

| | **Composition 2:** Polyol - amine tertiaire 100% | **Composition 3 :** Polyol - amine tertiaire 50% | **Composition 4:** Polyol - amine tertiaire 0% |
|---|---|---|---|
| **Composants** | | | |
| Polyol I (%m) | 38 | 19 | / |
| Polyol II (%m) | / | 19 | 38 |
| HFC 365mfc (%m) | 18 | 18 | 18 |
| Eau (%m) | 2 | 2 | 2 |
| MDI (%m) | 42 | 42 | 42 |
| | | | |

| **Paramètre de moussage** | | | |
|---|---|---|---|
| Temps de crème (s) | 5s | 7s | 9s |
| | | | |
| **Conductivité thermique (mW**/**m**.**K))** | 26,7 | 26,1 | 25,4 |

La composition 2 correspond à un mélange de polyols I obtenu à l'étape a) ne subissant aucune protonation avant de réagir avec le MDI, l'eau et un hydrofluorocarbure afin de former la mousse de polyuréthane.

Cet exemple met en évidence que la transformation des amines tertiaires en sel d'ammonium tertiaire permet d'abaisser la réactivité du polyol et a pour conséquence d'augmenter le temps de crème.

La réduction des temps de crème doit cependant être maîtrisée afin d'obtenir les propriétés de moussage optimales (homogénéité et finesse) et donc d'obtenir des structures alvéolaires maîtrisées.

La structure alvéolaire des polyuréthanes (PU) ainsi synthétisés influe directement sur la conductivité thermique des matériaux obtenus. En cela, une augmentation du temps de crème permet une amélioration des propriétés de conductivité thermique.

Le lien établi entre le temps de crème et la conductivité thermique du matériau a été prouvé pour des temps de crème inférieurs à 20 secondes.

Les structures cellulaires des mousses de polyuréthane ont été étudiées par Microscopie Electronique à Balayage (MEB).

Les clichés MEB des Figures 1 à 3 montrent l'influence du temps de crème sur la structure cellulaire des PU synthétisés.

Le cliché MEB de la composition 2 (Figure 1) met en évidence des cellules de taille comprise entre 50 µm et 200 µm. De plus, on observe la déchirure de certaines cellules contribuant à diminuer les performances d'isolation thermique du matériau.

Le cliché MEB de la composition 3 met en évidence des cellules de taille inférieure à 100 µm. Le taux de cellules ayant subi un déchirement est diminué comparativement à la composition 1.

Le cliché MEB de la composition 4 met en évidence des cellules de taille inférieure à 80um. On observe cependant toujours un déchirement de certaines cellules mais l'apparition de cellules fermées contribuant à une amélioration des propriétés d'isolation thermique.

**Conclusions :** Nous pouvons noter une amélioration de la structure cellulaire des mousses de polyuréthane avec une augmentation du temps de crème. En effet, une augmentation du temps de crème permet un moussage plus homogène et contrôlé, ceci permettant de réduire le taux de cellules subissant des déchirements au cours de leur expansion. On observe également une diminution de la taille moyenne des cellules ainsi qu'une augmentation du taux de cellules fermées, facteurs contribuant directement à l'amélioration des propriétés d'isolation thermique.

Ces clichés sont en cohérence avec la variation de conductivité thermique observée entre les 3 échantillons.

### Exemple 3 : Procédé selon l'invention par alkylation

Les amines tertiaires, présentes au sein de la structure des polyols obtenus à l'étape a), sont soumises à une réaction d'alkylation pour conduire à des sels d'ammonium quaternaires. La conversion de ces amines tertiaires en sels d'ammonium quaternaires permet d'annihiler l'effet catalytique des polyols obtenus à l'étape a) vis-à-vis de la réaction alcool/isocyanate. En cela, cette étape b) d'alkylation permet de moduler l'effet catalytique en faisant varier le ratio d'amines tertiaires quaternisées.

Un ballon de 25mL, chargé en polyols issus de l'étape a) de l'Exemple 2 (3,05g, 5,69mmol) et dissous dans 20mL de dichlorométhane, est maintenu sous agitation à température ambiante. A ce milieu réactionnel est ajouté l'iodométhane (1,61g, 11,38mmol). Le mélange est maintenu sous agitation pendant 1 heure à température ambiante et ensuite porté à 35°C pendant 8 heures. Une séparation de phase est observée au cours de la réaction, ceci permettant l'élimination du surnageant en fin de réaction. Le milieu réactionnel est ensuite soumis à un lavage au dichlorométhane (3 x 15mL) puis le résidu de solvant est éliminé par simple évaporation pour conduire à la formation d'une huile orangée avec un rendement supérieur à 95%.

### Exemple 4 : Synthèse d'un nouveau composé de type oxazolidine à partir du méthyl ricinoleate pour la formulation de mousses polyuréthanes

a) Un ballon de 50mL comprenant un mélange de methyl ricinoleate (5,000 g, 0,016 mol) et de N-(2-hydroxyethyl)ethylenediamine (2,083 g, 0,020 mol) est porté à une température de 120 °C pendant 18 heures. Le méthanol ainsi formé lors de la réaction est éliminé à l'évaporateur rotatif. Un lavage à l'eau (3 x 15mL) est réalisé afin d'éliminer la N-(2-hydroxyethyl)ethylenediamine non consommée, et permettant l'obtention d'une huile jaune.
   Produit obtenu (alc-ath-004) : 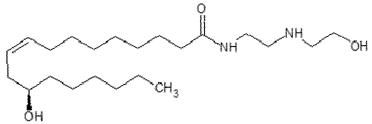
b) Un ballon de 25mL comprenant un mélange de alc-ath-004 (3,000 g, 0,008 mol) et de paraformaldehyde (0,234 g, 0,008 mol) est porté à une température de 65°C pendant 2,5 heures. En fin de réaction, l'eau ainsi formée est évaporée. Le résidu est ensuite purifié par Chromatography flash pour l'obtention d'une oxazolidine (oxa-ath-004).

Produit obtenu (oxa-ath-004) :

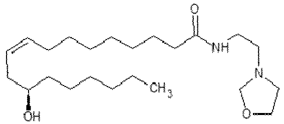

## Revendications

1. Procédé de préparation de mousse de polyuréthane et/ou polyisocyanurate comprenant les étapes suivantes :
a) préparation d'un mélange de polyols I de formule (I) suivante par réaction entre une molécule de la famille des oxazolidines de formule (A) suivante et de l'huile de coque de noix de cajou, 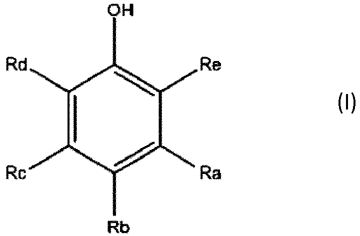 dans laquelle :
Ra représente 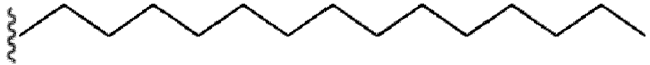 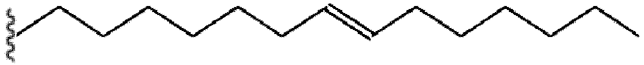 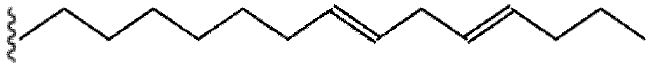 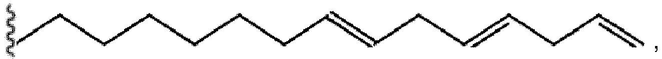
Rb représente H ou 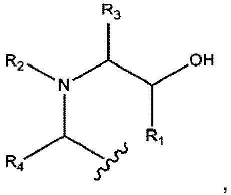
Re représente H, COOH ou 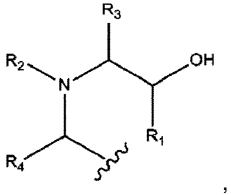
Rc représente H ou OH,
Rd représente H, CH₃ ou 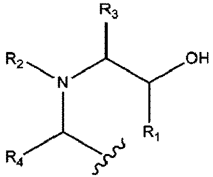 à condition que lorsque Rd représente CH₃, Rc représente OH, Rb et Re représentent indépendamment H ou 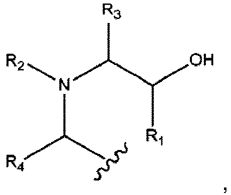 Rb et Re ne pouvant pas représenter H en même temps et à condition que lorsque Rd ne représente pas CH3, qu'au moins un parmi Rb, Rd et Re représente 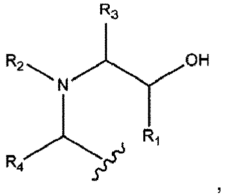 R₁, R₃ et R₄ représentent indépendamment les uns des autres H, un groupe (C₁-C₆)alkyle ou (C₁-C₆) alkyl-aryle, et R₂ représente un groupe (C₁-C₂₀)alkyle ou (C₁-C₂₀) alkyl-alcool, et 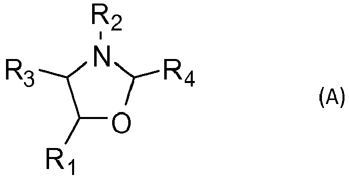 dans laquelle R₁, R₂, R₃ et R₄ sont tels que définis précédemment.
b)
i. protonation ou alkylation totale desdits polyols I du mélange de l'étape a), de manière à obtenir un mélange de polyols II ou
ii. protonation ou alkylation partielle desdits polyols I du mélange de l'étape a) de manière à obtenir un mélange de polyols I et II,
ladite protonation étant réalisée par un agent donneur de proton et ladite alkylation étant réalisée par un dérivé alkylant,
c) réaction du mélange préparé à l'étape b) avec au moins un polyisocyanate.

2. Procédé de préparation selon la revendication 1, **caractérisé en ce que** ladite huile de coque de noix de cajou est une huile de coque de noix de cajou brute, décarboxylée (T-CNSL) ou distillée (D-CNSL).

3. Procédé de préparation selon l'une quelconque des revendications précédentes, **caractérisé en ce que** dans ladite molécule de la famille des oxazolidines de formule (A), R₁ représente H ou CH₃, R₃ et R₄ représentent H et R₂ représente un groupement (C₂-C₃)alkylalcool.

4. Procédé de préparation selon l'une quelconque des revendications précédentes, **caractérisé en ce que** lesdits polyols I et II présentent un indice hydroxyle compris entre 300 et 600 et une fonctionnalité moyenne comprise entre 2 et 7.

5. Procédé de préparation selon l'une quelconque des revendications précédentes, **caractérisé en ce que** ledit agent donneur de proton utilisé pour la préparation des polyols II est choisi parmi les acides minéraux, tel que l'acide chlorhydrique, les acides organiques tel que l'acide acétique ou les ammoniums protonés tel que le chlorure d'ammonium.

6. Procédé de préparation selon l'une quelconque des revendications précédentes, **caractérisé en ce que** ledit dérivé alkylant utilisé pour la préparation des polyols II est choisi parmi les halogénures d'alkyles tel que l'iodométhane et les sulfonates d'alkyles.

7. Procédé de préparation selon l'une quelconque des revendications précédentes, **caractérisé en ce que** ladite protonation ou alkylation partielle consiste en une protonation ou alkylation supérieure ou égale à 10% et inférieure à 100% en poids des polyols I.

8. Procédé de préparation selon l'une quelconque des revendications précédentes, **caractérisé en ce que** ledit polyisocyanate est choisi parmi les polyisocyanates aromatiques, aliphatiques, cycloaliphatiques, arylaliphatiques et leurs mélanges, avantageusement les polyisocyanates aromatiques.

9. Procédé de préparation selon l'une quelconque des revendications précédentes, **caractérisé en ce qu'**il comprend en outre l'ajout à l'étape c), d'un agent d'expansion sélectionné parmi les hydrofluorooléfines, les hydrofluorocarbures, les composés liquides et gazeux, avantageusement l'agent d'expansion est H₂O

10. Procédé de préparation selon l'une quelconque des revendications précédentes, **caractérisé en ce qu'**il comprend en outre l'ajout à l'étape c), d'un retardateur de flamme organophosphoré, avantageusement le TCCP.

11. Mousses de polyuréthane et/ou polyisocyanurate susceptibles d'être obtenues par le procédé de préparation selon l'une quelconque des revendications précédentes.

12. Mousses de polyuréthane et/ou polyisocyanurate selon la revendication 11, **caractérisée en ce que** sa densité est comprise entre 10 et 300 kg/m³.

13. Mousses de polyuréthane et/ou polyisocyanurate selon la revendication 10 ou 11, comme matériau d'isolation.

14. Utilisation de mousses de polyuréthane et/ou polyisocyanurate selon la revendication 10 ou 11, comme colle.

15. Utilisation de mousses de polyuréthane et/ou polyisocyanurate selon la revendication 10 ou 11, comme solution d'enrobages de particules.

16. Utilisation de mousses de polyuréthane et/ou polyisocyanurate selon la revendication 10 ou 11, dans la fabrication de panneaux d'isolation.

17. Utilisation de mousses de polyuréthane et/ou polyisocyanurate selon la revendication 10 ou 11, dans la fabrication de panneaux d'agencement

18. Procédé de préparation d'un mélange de polyols I' de formule (I') suivante par réaction entre la 2-(3-oxazolidine)propan-2-ol et de l'huile de coque de noix de cajou éventuellement suivie d'une protonation et/ou alkylation totale ou partielle dudit mélange de polyols I', ladite protonation étant réalisée par un agent donneur de proton et ladite alkylation étant réalisée par un dérivé alkylant, 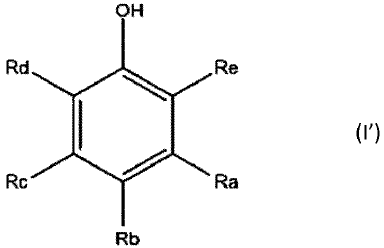 dans laquelle :
Ra représente 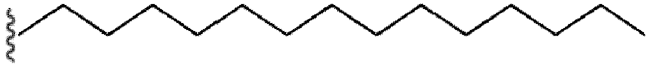 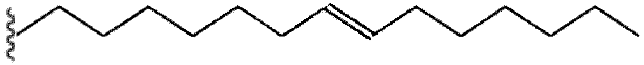 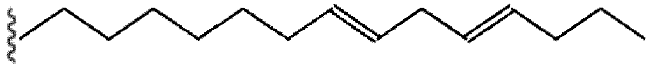 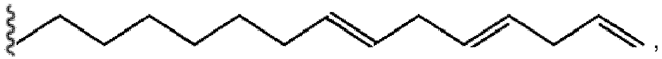
Rb représente H ou 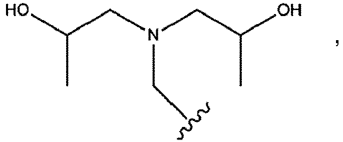
Re représente H, COOH ou, 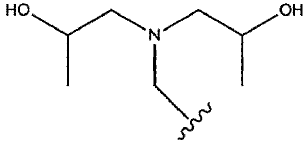
Rd représente H, CH₃ ou 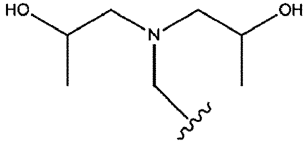
Rc représente H ou OH, à condition que lorsque Rd représente CH₃, Rc représente OH, Rb et Re représentent indépendamment H ou 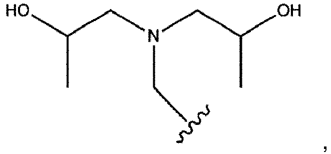 Rb et Re ne pouvant pas représenter H en même temps et à condition que lorsque Rd ne représente pas CH3, qu'au moins un parmi Rb, Rd et Re représente
